# EUROPÄISCHE PATENTSCHRIFT

(11) **EP 1 614 209 B1**
(45) Veröffentlichungstag und Bekanntmachung des Hinweises auf die Patenterteilung: **27.02.2008**
(21) Anmeldenummer: 03782157.6
(22) Anmeldetag: 10.12.2003
(51) Int. Cl.: H02K 7/12, F16D 49/00, F16D 65/14

(54) **BREMSEINRICHTUNG FÜR EINEN ELEKTROMOTOR**
BRAKE DEVICE FOR AN ELECTRIC MOTOR
DISPOSITIF DE FREINAGE POUR UN MOTEUR ELECTRIQUE

(30) Priorität: 01.04.2003 DE 10314886
(43) Veröffentlichungstag der Anmeldung: 11.01.2006
(73) Patentinhaber: ROBERT BOSCH GMBH, 70442 Stuttgart (DE)
(72) Erfinder: HABELE, Michael, 71111 Waldenbuch (DE)
(86) Internationale Anmeldenummer: PCT/DE2003/004072
(87) Internationale Veröffentlichungsnummer: WO 2004/088821

(56) Entgegenhaltungen:
- WO-A-02/084846
- DE-A- 1 538 902
- DE-A- 2 263 475
- FR-A- 1 098 914
- GB-A- 1 451 165

## Beschreibung

### Stand der Technik

Die Erfindung geht aus von einem Elektromotor mit einer Bremseinrichtung nach dem Oberbegriff des Anspruchs 1.

Aus DE 198 60 396 A1 ist eine Bremseinrichtung für einen Gleichstromreihenschlussmotor bekannt, die es ermöglicht, den Rotor des Gleichstromreihenschlussmotors beim Abschalten abzubremsen. Hierzu weist die bekannte Bremseinrichtung ein wippenförmiges Bremselement mit einem Bremsarm und einem Ausrückarm auf, wobei das wippenförmige Bremselement zwischen einer Bremsstellung und einer Betriebsstellung schwenkbar ist. An dem Bremsarm ist hierbei eine Bremsbacke befestigt, wobei der Bremsarm mit der Bremsbacke durch eine Druckfeder in Richtung des Rotors vorgespannt wird und diesen in der Bremsstellung abbremst.

Der Ausrückarm des wippenförmigen Bremselements hat dagegen die Aufgabe, den Bremsarm mit der Bremsbacke im Betrieb von dem Rotor abzuheben, damit sich der Rotor frei drehen kann. Hierzu schließt der Ausrückarm mit einem Jochteil des Stators einen Luftspalt ein, so dass der Ausrückarm bei einer Bestromung der Statorwicklung auf das Jochteil gezogen wird, wobei die Bremsbacke von dem Rotor abgehoben wird.

Bei der bekannten Bremseinrichtung ist der Bremsarm mit der Bremsbacke an dem wippenförmigen Bremselement bezüglich der Drehrichtung des Rotors auflaufseitig angeordnet, wohingegen der Ausrückarm an dem Bremselement ablaufseitig angeordnet ist. Diese auflaufseitige Anordnung der Bremsbacke bietet den Vorteil, dass die auf die Bremsbacke wirkende Bremskraft ein Drehmoment auf das Bremselement ausübt, wodurch die von der Feder erzeugte Anpresskraft unterstützt wird.

Aus FR 1098914 A ist eine Bremseinrichtung für einen Elektromotor mit einem Bremselement bekannt, bei dem bezüglich einer Drehrichtung des Rotors ablaufseiflg eine Bremsbacke angeordnet ist.

Außerdem beschreibt DE 2263475 A einen Elektromotor mit einer eine Reibscheibe und einen Bremskörper aufweisenden Reibungsbremse für den Motoranker. Dabei ist ein durch Federkraft annähernd tangential mit kleinem Reibwinkel an die Reibscheibe anlegbarer Bremskörper vorgesehen.

In WO 02/084846 A1 ist ferner ein Elektromotor mit mindestens einem seiner zum Stator gehörenden Polschuhe ein in Richtung auf den Rotor bewegbares Bremselement mit Bremsbelag beschrieben. Das Bremselement weist ablaufseitig eine Trennfläche auf, die dazu vorgesehen ist, eine magnetische Anziehungskraft auf das Bremselement zu erzeugen, um eine Ausrückbewegung des Bremselements zu bewirken.

### Vorteile der Erfindung

Die Erfindung sieht demgegenüber eine Bremseinrichtung vor, bei der die Bremsbacke an dem Bremselement bezüglich der Drehrichtung des Rotors ablaufseitig angeordnet ist.

Die Erfindung geht hierbei von der Erkenntnis aus, dass die magnetische Flussdichte in dem Joch des Stators auflaufseitig größer ist als auf der Ablaufseite, so dass die eingangs beschriebene auflaufseitige Anordnung der Bremsbacke zu einer größeren Leistungsminderung'führt als die erfindungsgemäße ablaufseitige Anordnung der Bremsbacke.

Der im Rahmen der Erfindung verwendete Begriff einer Bremsbacke ist allgemein zu verstehen und umfasst nicht nur separate Bremsbacken, die an dem Bremselement befestigt werden, sondern auch einstückig an das Bremselement angeformte Bremsbacken.

Das Bremselement weist einen ablaufseitigen Bremsarm und einen auflaufseitigen Ausrückarm auf, wobei die Bremsbacke an dem ablaufseitigen Bremsarm angebracht ist.

Vorzugsweise weist der Stator des Elektromotors ein auflaufseitiges Jochteil aus einem magnetisch leitfähigen Material und eine Statorwicklung auf, wobei das Bremselement vorzugsweise ebenfalls magnetisch leitfähig ist und zusammen mit dem auflaufseitigen Joch des Stators einen Motorluftspalt zu dem Rotor des Elektromotors einschließt, der in der Bremsstellung auflaufseitig im Wesentlichen eine konstante Spaltbreite aufweist. Das Bremselement dient hierbei also zur Führung des von der Statorwicklung erzeugten magnetischen Flusses und ist an den Motorluftspalt angepasst, so dass der magnetische Fluss durch das Bremselement kaum behindert wird. In der Bremsstellung des Bremselements geht das auflaufseitig angeordnete Jochteil des Stators also möglichst absatzlos und fließend in den Ausrückarm des Bremselements über.

Zwischen dem auflaufseitigen Jochteil des Stators und dem Ausrückarm des Bremselements befindet sich vorzugsweise ein Luftspalt, wobei sich in dem auflaufseitigen Jochteil zwischen der Statorwicklung und dem Luftspalt für den Ausrückarm des Bremselements eine Engstelle befindet, die einen magnetischen Widerstand in dem auflaufseitigen Jochteil bildet. Beim Starten des Elektromotors geht das Material in dieser auch als "Bottle Neck" bezeichneten Engstelle in Sättigung, so dass das wippenförmige Bremselement mit maximaler Kraft angezogen wird, wodurch der Bremsbelag von dem Rotor abgehoben wird, so dass sich der Rotor frei drehen kann.

In einem bevorzugten Ausführungsbeispiel der Erfindung besteht das Bremselement aus mehreren Blechpaketen, die jeweils aus mehreren Elektroblechen bestehen und nebeneinander angeordnet sind. Diese Blechung des Bremselements verringert im Vergleich zu einer massiven Fertigung des Bremselements Wirbelstromverluste in dem Bremselement. Darüber hinaus ermöglicht die Aufteilung des Bremselements in mehrere Blechpakete eine sehr maßgenaue Fertigung des Bremselements auch mit relativ groben Fertigungstoleranzen. Ein handelsübliches Elektroblech weist beispielsweise eine Toleranz von 4% der Blechdicke auf. Dies bedeutet beispielsweise für ein Blechpaket mit einer Nenn-Dicke von 60 mm eine maximale Maßabweichung von 2,4 mm. Zum Ausgleich dieser Maßabweichung wird die Anzahl der Elektrobleche in den einzelnen Blechpaketen variiert. Falls beispielsweise ein Blechpaket ein Übermaß aufweist, so kann das benachbarte Blechpaket mit einem Untermaß gefertigt werden, indem dieses Blechpaket ein Elektroblech weniger enthält.

Vorzugsweise ist das Bremselement durch einen Lagerstift schwenkbar gelagert, wobei der Lagerstift durch eine formschlüssige und verdrehsichere Verbindung in einer fest stehenden Lagerstelle gelagert ist.

Bei einer Schwenkbewegung des Bremselements findet also nur eine Relativbewegung zwischen dem Bremselement und dem Lagerstift statt, wohingegen der Lagerstift relativ zu seiner Lagerstelle fixiert ist. Dies ist vorteilhaft, da die Kontaktfläche zwischen dem Lagerstift und der Lagerstelle wesentlich kleiner ist als die Kontaktfläche zwischen dem Lagerstift und dem Bremselement und deshalb bei einer Relativbewegung schneller verschleißen würde. Die Fixierung des Lagerstifts relativ zu seiner Lagerstelle verbessert also die mechanische Standfestigkeit der Lagerung und erhöht somit die Lebensdauer der Bremseinrichtung.

Die formschlüssige und verdrehsichere Verbindung des Lagerstifts mit der Lagerstelle kann beispielsweise dadurch erfolgen, dass der Lagerstift an seinen Stirnseiten abgeflacht wird, um eine Verdrehung zu verhindern.

Darüber hinaus ist in der Erfindung vorgesehen, dass die normalerweise durch eine Feder erzeugte Bremskraft durch eine entsprechende Gestaltung der Bremseinrichtung zusätzlich unterstützt oder ersetzt wird. Hierzu liegt das Bremselement in der Bremsstellung ablaufseitig an einer feststehenden Anschlagfläche an, wobei die Anschlagfläche gegenüber der Radialrichtung des Rotors einen vorgegebenen Neigungswinkel aufweist, um eine Selbstklemmung des Bremselements zu erreichen. Die auf die Bremsbacke wirkende und tangential zu der Mantelfläche des Rotors ausgerichtete Bremskraft führt hierbei dazu, dass das Bremselement entlang der Anschlagfläche in Richtung auf den Rotor gezogen wird, wodurch die Bremsbacke stärker gegen den Rotor gedrückt wird.

Der Neigungswinkel der Anschlagfläche relativ zu der Radialrichtung liegt hierbei vorzugsweise im Bereich zwischen 20° und 70°, wobei beliebige Zwischenwerte möglich sind. Darüber hinaus wird das Bremselement vorzugsweise durch eine Druckfeder in Richtung der Bremsstellung vorgespannt, um die Bremsbacke auf den Rotor zu drücken, wobei an dem Bremselement ein Führungssporn für die Druckfeder angeordnet ist, der in die Druckfeder hinein ragt.

Ferner betrifft die Erfindung auch eine Werkzeugmaschine mit einem derartigen Elektromotor, wobei beispielsweise Handbohrmaschinen, Handkreissägen und Schleifgeräte zu nennen sind.

### Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine Querschnittsansicht eines Teils eines Gleichstromreihenschlussmotors mit einer Bremseinrichtung,
- Fig. 2: eine Längsschnittansicht des Gleichstromreihenschlussmotors aus Figur 1,
- Fig. 3: eine Perspektivansicht eines Stators des Gleichstromreihenschlussmotors aus den Figuren 1 und 2,
- Fig. 4: eine Perspektivansicht eines Lagerstifts der Bremseinrichtung aus Figur 1,
- Fig. 5: eine Perspektivansicht eines Bremselements der Bremseinrichtung aus Figur 1 sowie
- Fig. 6: eine schematisierte Schnittansicht einer erfindungsgemäßen Bremseinrichtung.

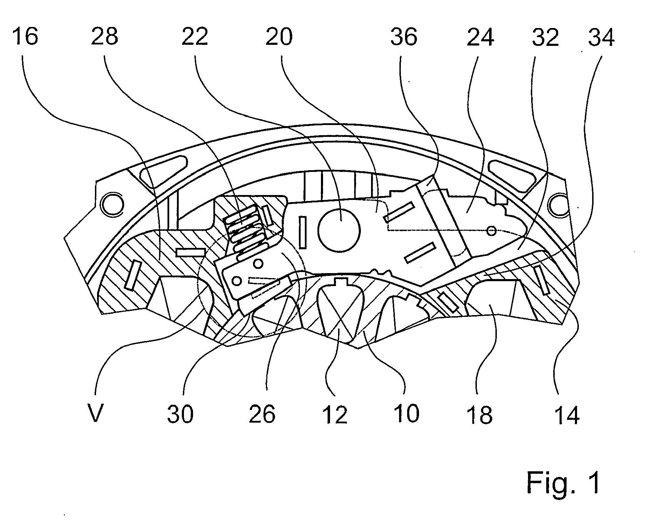

Die Querschnittsansicht in Figur 1 zeigt einen Rotor 10 eines Elektromotors, wobei der Rotor 10 um eine rechtwinklig zur Zeichenebene verlaufende Drehachse entgegen dem Uhrzeigersinn drehbar ist und mehrere Rotorwicklungen 12 aufweist.

Weiterhin zeigt die Zeichnung ein auflaufseitiges Jochteil 14 sowie ein ablaufseitiges Jochteil 16 eines Stators des Elektromotors, wobei die beiden Jochteile 14, 16 aus einem magnetisch leitfähigen Material bestehen und den magnetischen Fluss führen, der von einer Statorwicklung 18 erzeugt wird.

Darüber hinaus ist ein wippenförmiges Bremselement 20 dargestellt, das um einen Lagerstift 22 schwenkbar gelagert ist, wobei das wippenförmige Bremselement 20 einen auflaufseitig angeordneten Ausrückarm 24 und einen ablaufseitig angeordneten Bremsarm 26 aufweist.

Der Bremsarm 26 des wippenförmigen Bremselements 20 wird durch eine Druckfeder 28 in Richtung auf den Rotor 10 vorgespannt, wobei sich die Druckfeder 28 in einer entsprechenden Tasche in dem Jochteil 16 abstützt. Auf der dem Rotor 10 zugewandten Seite des Bremsarms 26 ist hierbei ein Bremsbelag angebracht, der in der in Figur 1 dargestellten Bremsstellung auf der Mantelfläche des Rotors 10 aufliegt und diesen dadurch abbremst.

Der Ausrückarm 24 des wippenförmigen Bremselements 20 hat dagegen die Aufgabe, den Bremsarm 26 mit einer Bremsbacke 30 von dem Rotor 10 abzuheben, damit sich dieser frei drehen kann. Zwischen dem Ausrückarm 24 und dem auflaufseitigen Jochteil 14 des Stators befindet sich hierzu ein Luftspalt 32, so dass der Ausrückarm 24 bei einer Bestromung der Statorwicklung 18 auf das Jochteil 14 gezogen wird, wobei sich das wippenförmige Bremselement 20 im Uhrzeigersinn dreht und die Bremsbacke 30 von dem Rotor 10 abgehoben wird.

Zwischen der Statorwicklung 18 und dem Luftspalt 32 befindet sich in dem auflaufseitigen Jochteil 14 hierbei eine Engstelle 34, die einen magnetischen Widerstand bildet und beim Starten des Elektromotors in Sättigung gerät, so dass der Ausrückarm 24 des wippenförmigen Bremselements 20 beim Starten des Elektromotors mit maximaler Kraft angezogen wird.

Darüber hinaus ist der Ausrückarm 24 des wippenförmigen Bremselements 20 von einem Kurzschlussring 36 umgeben, der in der Betriebsstellung des Bremselements 20 mechanische Vibrationen unterdrückt.

Weiterhin ist zu erwähnen, dass sich das Bremselement 20 auf seiner Auflaufseite in der Betriebsstellung innen an die Kontur des Rotors 10 anpasst, so dass zwischen dem auflaufseitigen Jochteil 14 und dem Bremselement 20 auf der einen Seite und dem Rotor 10 auf der anderen Seite ein konstanter Motorluftspalt besteht. In der Betriebsstellung stört das Bremselement 20 deshalb den größeren magnetischen Fluss von dem auflaufseitigen Jochteil 14 über den Ausrückarm 24 in den Rotor 10 kaum, so dass die Leistung des Elektromotors durch die Bremseinrichtung kaum verringert wird.

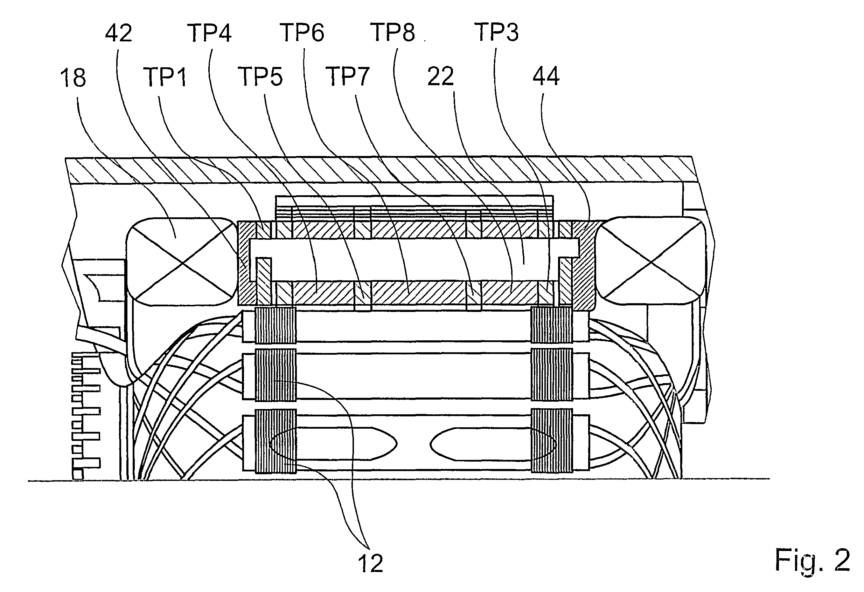

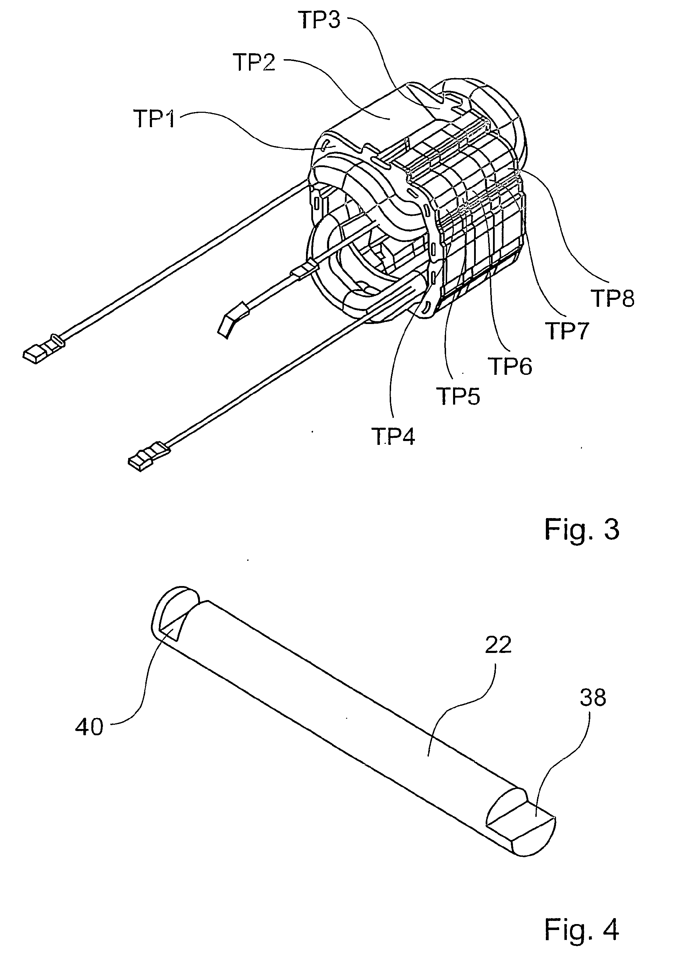

Aus den Figuren 2 und 3 ist weiterhin ersichtlich, dass das ablaufseitige Jochteil 16 des Stators aus mehreren Blechpaketen mit unterschiedlichen Querschnitten TP4 - TP8 zusammengesetzt ist, während das auflaufseitige Jochteil 14 aus einem einzigen Blechpaket TP2 besteht. Darüber hinaus ist seitlich jeweils ein weiteres Blechpaket TP1 und TP3 angeordnet, wobei sämtliche Blechpakete TP1 - TP8 aus Elektroblechen mit einer Blechdicke von jeweils 0,5 mm bestehen. Die Aufteilung des ablaufseitigen Jochteils 16 in mehrere Blechpakete TP4 - TP8 bietet den Vorteil, dass mit relativ geringem Aufwand Längentoleranzen eingehalten werden können.

Der in Figur 2 gezeigte Lagerstift 22 geht hierbei durch das Bremselement 20 hindurch und ist seitlich in entsprechende Lagerstellen in den Blechpaketen TP1 bzw. TP3 eingehängt. Die Verbindung des Lagerstifts 22 mit den Lagerstellen erfolgt hierbei formschlüssig und verdrehsicher, damit sich der Lagerstift 22 relativ zu den Lagerstellen in den Blechpaketen TP1 und TP3 nicht drehen kann. Dies ist vorteilhaft, da die Kontaktfläche an diesen Lagerstellen relativ klein ist, was bei einer Relativbewegung zu einem relativ großen mechanischen Verschleiß führen würde. Hierzu weist der Lagerstift 22 an seinen Stirnseiten beidseitig Abflachungen 38, 40 auf, die eine Verdrehung des Lagerstifts 22 verhindern.

Darüber hinaus ist zwischen den Enden des Lagerstifts 22 und der Statorwicklung 18 während der Fertigung bzw. dem Einlegen der Spule ein Abstandshalter 42 angeordnet, der die minimale Luftstrecke zwischen Feldeisen und Spule gewährleistet.

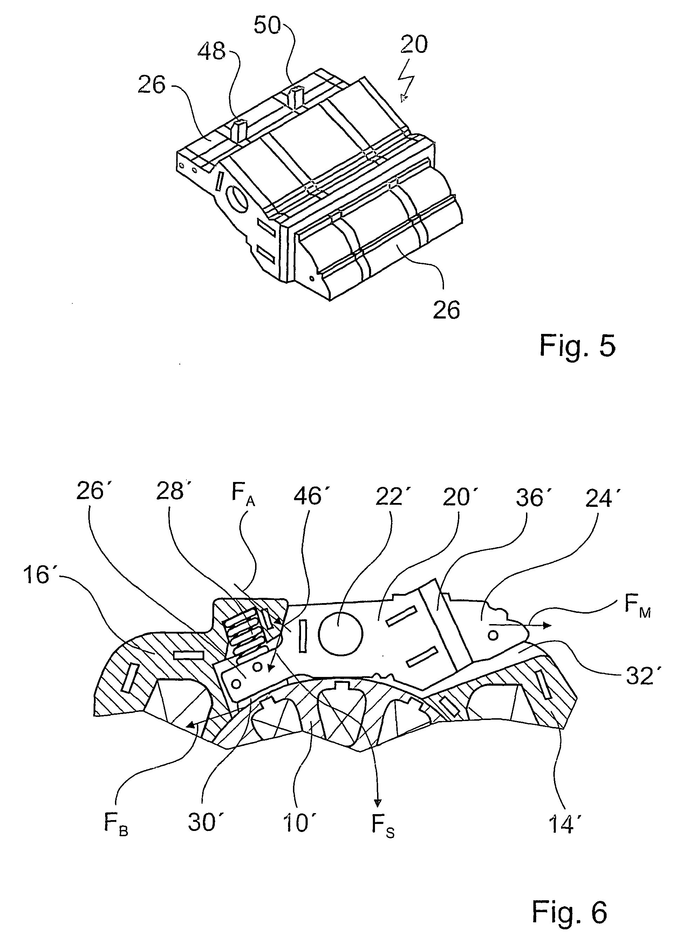

Ferner zeigt Figur 5 das Bremselement 20 der Bremseinrichtung aus Figur 1, wobei an dem Bremsarm 26 zwei Führungssporne 48, 50 angebracht sind, die in die Druckfeder 28 bzw. eine daneben angebrachte weitere Druckfeder hineinragen und diese dadurch stabilisieren.

Figur 6 zeigt schließlich ein Ausführungsbeispiel einer erfindungsgemäßen Bremseinrichtung, das mit dem vorstehend beschriebenen Beispiel weitgehend übereinstimmt, so dass im Folgenden zur Vermeidung von Wiederholungen auf die vorstehende Beschreibung verwiesen wird und für entsprechende Bauteile dieselben Bezugszeichen verwendet werden, die zur Unterscheidung lediglich durch ein Apostroph gekennzeichnet sind.

Eine Besonderheit dieser Bremseinrichtung besteht darin, dass das ablaufseitige Jochteil 16' eine Anschlagfläche 46' aufweist, an der das Bremselement 20' ablaufseitig anliegt. Diese Anschlagfläche 46' ist hierbei als Radius ausgeführt, der seinen Ursprung im Drehpunkt des Bremselementes hat. Die Reaktionskraft FA wirkt immer durch den Drehpunkt und erzeugt somit keine Servokraft.

Im Bremsbetrieb entsteht an der Anschlagfläche 46' also aufgrund der auf die Bremsbacke 30' wirkenden Bremskraft F_{B} eine Anpresskraft F_{A} sowie eine planparallele Servokraft F_{S}, die den Bremsarm 26' mit der Bremsbacke 30' gegen den Rotor 10' drückt.

Darüber hinaus ist in Figur 5 eine Magnetkraft F_{M} eingezeichnet, die bei einer Bestromung der Statorwicklung auf den Ausrückarm 24' des Bremselements 20' wirkt und dieses aus der in Figur 5 gezeigten Bremsstellung im Uhrzeigersinn in die Betriebsstellung dreht.

### Bezugszeichen

- 10, 10': Rotor
- 12: Rotorwicklung
- 14, 14': Jochteil
- 16, 16': Jochteil
- 18: Statorwicklung
- 20, 20': Bremselement
- 22, 22': Lagerstift
- 24, 24': Ausrückarm
- 26, 26': Bremsarm
- 28, 28': Druckfeder
- 30, 30': Bremsbacke
- 32, 32': Luftspalt
- 34: Engstelle
- 36, 36': Kurzschlussring
- 38: Abflachung
- 40: Abflachung
- 42: Abstandshalter
- 46, 46': Anschlagfläche
- 48: Führungssporn
- 50: Führungssporn
- TP1 - TP8: Blechpaket

## Patentansprüche

1. Elektromotor mit einem Rotor (10, 10') und einem Stator, insbesondere für einen Gleichstromreihenschlussmotor, mit einer Bremseinrichtung umfassend ein Bremselement (20, 20'), das zwischen einer Bremsstellung und einer Betriebsstellung beweglich ist, wobei das Bremselement (20, 20') einen ablaufseitigen Bremsarm (26, 26') und einen auflaufseitigen Ausrückarm (24,24') aufweist und an dem Bremselement (20, 20') eine Bremsbacke (30, 30') angebracht ist, die den Rotor (10, 10') in der Bremsstellung abbremst, wobei die Bremsbacke (30, 30') bezüglich der Drehrichtung des Rotors (10,10') ablaufseitig an dem Bremselement.(20, 20') angebracht ist, **dadurch gekennzeichnet, dass** das Bremselement (20, 20') in der Bremsstellung ablaufseitig an einer feststehenden Anschlagfläche (46') anliegt, wobei die Anschlagfläche (46') gegenüber der Radialrichtung einen vorgegebenen Neigungswinkel aufweist, um eine Selbstklemmung des Bremselements (20,20') zu erreichen, so dass das Bremselement (20, 20') entlang der Anschlagfläche (46') in Richtung auf den Rotor (10, 10') gezogen wird.

2. Elektromotor nach Anspruch 1, **dadurch gekennzeichnet, dass** der Bremsarm (26, 26') die Bremsbacke (30, 30') trägt.

3. Elektromotor nach Anspruch 1 oder Anspruch 2, **dadurch gekennzeichnet, dass** der Stator ein auflaufseitiges Jochteil (14, 14') aus einem magnetisch leitfähigen Material und eine Statorwicklung (18) aufweist:

4. Elektromotor nach Anspruch 3, **dadurch gekennzeichnet, dass** das Bremselement (20, 20') magnetisch leitfähig ist und zusammen mit dem auflaufseitigen Jochteil (16, 16') einen Motorluftspalt zu dem Rotor (10, 10') einschließt, der in der Bremsstellung auflaufseitig im Wesentlichen eine konstante Spaltbreite aufweist.

5. Elektromotor nach Anspruch 3 oder Anspruch 4, **dadurch gekennzeichnet, dass** sich zwischen dem auflaufseitigen Jochteil (14, 14') und dem Ausrückarm des Bremselements (20, 20') ein Luftspalt (32, 32') befindet, wobei sich in dem auflaufseitigen Jochteil (14,14') zwischen der Statorwicklung (18) und dem Luftspalt (32, 32') zu dem Ausrückarm (24, 24') des Bremselements (20, 20') eine Engstelle (34) befindet, die einen magnetischen Widerstand in dem auflaufseitigen Jochteil (14,14') bildet.

6. Elektromotor nach einem der vorhergehenden Ansprüche, **dadurch gekennzeichnet, dass** das Bremselement (20, 20') und/oder das auflaufseitige Jochteil (14,14') und/oder das ablaufseitige Jochteil (16,16') mehrere Blechpakete (TP1 - TP8) aufweist, die jeweils aus mehreren Elektroblechen bestehen und bezüglich der Schwenkachse axial hintereinander angeordnet sind.

7. Elektromotor nach einem der vorhergehenden Ansprüche, **gekennzeichnet durch** einen Lagerstift (22, 22') zur Lagerung des Bremselements (20, 20'), wobei der Lagerstift (22, 22') **durch** eine formschlüssige und verdrehsichere Verbindung in einer feststehenden Lagerstelle gelagert ist.

8. Elektromotor nach einem der vorhergehenden Ansprüche, **dadurch gekennzeichnet, dass** das Bremselement (20, 20') durch eine Druckfeder (28, 28') in Richtung der Bremsstellung vorgespannt ist, wobei an dem Bremselement (20, 20') ein Führungssporn (48, 50) für die Druckfeder (28, 28') angeordnet ist, der in Druckfeder (28, 28') hineinragt.

9. Werkzeugmaschine mit einem Elektromotor nach einem der vorhergehenden Ansprüche.

## Claims

1. Electric motor with a rotor (10, 10') and a stator, in particular for a DC series-wound motor, having a braking device comprising a braking element (20, 20') which can move between a braking position and an operating position, with the braking element (20, 20') having a trailing-side braking arm (26, 26') and a leading-side disengagement arm (24, 24'), and a brake shoe (30, 30'), which brakes the rotor (10, 10') in the braking position, being fitted to the braking element (20, 20'), with the brake shoe (30, 30') being fitted to the braking element (20, 20') on the trailing side with respect to the direction of rotation of the rotor (10, 10'), **characterized in that** the braking element (20, 20') rests against a fixed stop face (46') in the braking position on the trailing side, with the stop face (46') having a predefined angle of inclination in relation to the radial direction, in order to provide self-clamping of the braking element (20, 20'), so that the braking element (20, 20') is drawn along the stop face (46') in the direction of the rotor (10, 10').

2. Electric motor according to Claim 1, **characterized in that** the braking arm (26, 26') carries the brake shoe (30, 30').

3. Electric motor according to Claim 1 or Claim 2, **characterized in that** the stator has a leading-side yoke part (14, 14'), which is composed of a magnetically permeable material, and a stator winding (18).

4. Electric motor according to Claim 3, **characterized in that** the braking element (20, 20') is magnetically permeable and, together with the leading-side yoke part (14, 14'), forms a motor air gap in relation to the rotor (10, 10'), which motor air gap essentially has a constant gap width on the leading side in the braking position.

5. Electric motor according to Claim 3 or Claim 4, **characterized in that** an air gap (32, 32') is located between the leading-side yoke part (14, 14') and the disengagement arm of the braking element (20, 20'), with a narrow point (34) which forms a magnetic resistance in the leading-side yoke part (14, 14') being located in the leading-side yoke part (14, 14') between the stator winding (18) and the air gap (32, 32') in relation to the disengagement arm (24, 24') of the braking element (20, 20').

6. Electric motor according to one of the preceding claims, **characterized in that** the braking element (20, 20') and/or the leading-side yoke part (14, 14') and/or the trailing-side yoke part (16, 16') have/has a plurality of laminated cores (TP1 - TP8) which each comprise a plurality of magnetic steel laminates and are arranged axially one behind the other with respect to the pivot axis.

7. Electric motor according to one of the preceding claims, **characterized by** a mounting pin (22, 22') for mounting the braking element (20, 20'), with the mounting pin (22, 22') being mounted at a fixed mounting point by an interlocking and rotationally secure connection.

8. Electric motor according to one of the preceding claims, **characterized in that** the braking element (20, 20') is prestressed in the direction of the braking position by a compression spring (28, 28'), with a guide spur (48, 50) for the compression spring (28, 28') being arranged on the braking element (20, 20'), the said guide spur protruding into the compression spring (28, 28').

9. Machine tool with an electric motor according to one of the preceding claims.

## Revendications

1. Moteur électrique comportant un rotor (10, 10') et un stator, notamment un moteur, série, à courant continu équipé d'une installation de frein ayant un élément de frein (20, 20') mobile entre une position de freinage et une position de fonctionnement, l'élément de frein (20, 20') ayant un bras de frein (26, 26') côté sortie et un bras de débrayage (24, 24') côté sortie et l'élément de frein (20, 20') comporte une mâchoire de frein (30, 30') qui freine le rotor (10, 10') en position de freinage, la mâchoire de frein (30, 30') étant installée sur l'élément de frein (20, 20') côté sortie, par rapport au sens de rotation du rotor (10, 10'),
**caractérisé en ce que**
l'élément de frein (20, 20') s'applique en position de freinage, côté sortie, contre une surface de butée (46') fixe,
la surface de butée (46') ayant un angle d'inclinaison prédéfini par rapport à la direction radiale pour réaliser l'auto-blocage de l'élément de frein (20, 20') de façon que l'élément de frein (20, 20') soit tiré le long de la surface de butée (46') en direction du rotor (10, 10').

2. Moteur électrique selon la revendication 1,
**caractérisé en ce que**
le bras de frein (26, 26') porte la mâchoire de frein (30, 30').

3. Moteur électrique selon la revendication 1 ou 2,
**caractérisé en ce que**
le stator comporte une partie d'étrier (14, 14') côté sortie en une matière magnéto-conductrice ainsi qu'un enroulement de stator (18).

4. Moteur électrique selon la revendication 3,
**caractérisé en ce que**
l'élément de frein (20, 20') est magnéto-conducteur et enferme avec la partie d'étrier (16, 16'), côté sortie, un entrefer de moteur par rapport au rotor (10, 10'), ayant une largeur d'intervalle pratiquement constante en position de freinage, côté sortie.

5. Moteur électrique selon la revendication 3 ou 4,
**caractérisé par**
un entrefer (32, 32'), entre la partie d'étrier (14, 14'), côté sortie et le bras de débrayage de l'élément de frein (20'),
et par un point étroit (34) formant une résistance magnétique dans la partie d'étrier (14, 14') côté sortie, entre l'enroulement de stator (18) et l'entrefer (32, 32'), par rapport au bras de débrayage (24, 24') de l'élément de frein (20, 20').

6. Moteur électrique selon l'une des revendications précédentes,
**caractérisé en ce que**
l'élément de frein (20, 20') et/ou la partie d'étrier (14, 14'), côté sortie, et/ou la partie d'étrier (16, 16'), côté sortie comportent plusieurs paquets de tôles (TP1 - TP8) composés chacun de plusieurs tôles d'électrodes, installés les uns derrière les autres axialement suivant l'axe de pivotement.

7. Moteur électrique selon l'une des revendications précédentes,
**caractérisé par**
une broche de palier (22, 22') pour monter l'élément de frein (20, 20'), la broche de palier (22, 22') étant montée dans un point de palier fixe par une liaison par la forme, bloquée en rotation.

8. Moteur électrique selon l'une des revendications précédentes,
**caractérisé en ce que**
l'élément de frein (20, 20') est précontraint en direction de la position de freinage par un ressort de compression (28, 28'), et l'élément de frein (20, 20') comporte une broche de guidage (48, 50) pour le ressort de compression (28, 28') qui pénètre dans le ressort de compression (28, 28').

9. Machine-outil comprenant un moteur électrique selon l'une des revendications précédentes.
